# EUROPEAN PATENT APPLICATION

(11) **EP 3 822 669 A1**
(43) Date of publication of application: **19.05.2021**
(21) Application number: 19833184.5
(22) Date of filing: 10.07.2019
(51) Int. Cl.: G02B 5/18, B32B 7/023, G02B 5/22, G02B 5/26, G02B 5/28

(54) **TRANSFER SHEET, COLOR FORMING SHEET, COLOR FORMING ARTICLE, AND TRANSFER METHOD**

(30) Priority: 10.07.2018 JP 2018130735
(71) Applicant: Toppan Printing Co., Ltd., Tokyo 110-0016 (JP)
(72) Inventor: KAWASHITA Masashi, Tokyo 110-0016 (JP); MINAMIKAWA Naoki, Tokyo 110-0016 (JP)
(74) Representative: Plasseraud IP
(86) International application number: PCT/JP2019/027347
(87) International publication number: WO 2020/013229

(57) **Abstract**

A transfer sheet includes: a peelable substrate; a resin layer that is in contact with the peelable substrate so as to be peelable and has an uneven structure on a surface opposite to a surface in contact with the peelable substrate; a thin film layer that is located on the uneven structure and has a surface shape following the uneven structure and from which reflected light enhanced by interference emerges; a low transmission layer that is located on a side of the thin film layer opposite to the resin layer and has a lower transmittance for light in a visible range than the thin film layer; and an adhesive layer that is located on a side of the low transmission layer opposite to the thin film layer.

## Description

### [Technical Field]

The present invention relates to a color developing sheet that exhibits structural colors, a transfer sheet and a color developing article including the color developing sheet, and a method of transferring the color developing sheet.

### [Background Art]

Structural colors that are often observed as the colors of organisms in nature such as morpho butterflies are visually recognized due to the effects of optical phenomena such as diffraction, interference, and scattering of light caused by the fine structure of objects. For example, structural colors due to multilayer film interference are generated by interference of light reflected at interfaces of adjacent thin films. Multilayer film interference is one of the principles of color development morpho butterfly wings. In morpho butterfly wings, a fine uneven structure on the surface of the wings causes scattering and diffraction of light in addition to multilayer film interference; thus, a vivid blue color is visually recognized in a wide observation angular range.

As a structure that artificially reproduces structural colors such as in morpho butterfly wings, as described in PTL 1, a structure has been proposed in which a multilayer film layer is laminated on the surface of a substrate having unevenly arranged fine asperities. In a structure in which a multilayer film layer is laminated on a flat surface, the wavelength of visually recognized reflected light changes greatly depending on the observation angle; thus, the color visually recognized changes greatly depending on the observation angle. On the other hand, in the structure of PTL 1, the irregular unevenness allows reflected light enhanced by interference to spread in multiple directions, leading to a gradual change in the color depending on the observation angle. This achieves a structure that exhibits a specific color in a wide observation angular range as in morpho butterfly wings.

### [Citation List]

### [Patent Literature]

[PTL 1] JP 2005-153192 A

### [Summary of the Invention]

### [Technical Problem]

In the structure described in PTL 1, the surface of the multilayer film layer has an uneven portion that follows the uneven portion of the substrate, and the surface of the multilayer film layer constitutes the surface of the structure. That is, due to exposure of the uneven structure, when a physical or chemical stress is applied to the structure from the outside, the uneven structure can be easily deformed. Deformation of the uneven structure changes the optical path length of light reflected at the multilayer film and reduces the effect of diffusing the reflected light in multiple directions; thus, the structure is less likely to provide the desired color development.

An object of the present invention is to provide a transfer sheet, a color developing sheet, a color developing article, and a transfer method capable of preventing deformation of an uneven structure having an optical function.

### [Solution to Problem]

A transfer sheet for solving the above problem is a transfer sheet including: a peelable substrate; an uneven layer that is in contact with the peelable substrate so as to be peelable and has an uneven structure on a surface opposite to a surface in contact with the peelable substrate; a thin film layer that is located on the uneven structure and has a surface shape following the uneven structure and from which reflected light enhanced by interference emerges; a low transmission layer that is located on a side of the thin film layer opposite to the uneven layer and has a lower transmittance for light in a visible range than the thin film layer; and an adhesive layer that is located on a side of the low transmission layer opposite to the thin film layer, wherein: a projection included in the uneven structure has a shape having one or more steps from a plane in which a base portion of the projection is located; when viewed in a direction perpendicular to the surface of the uneven layer, a pattern composed of the projection includes a pattern composed of a group of a plurality of shape elements in each of which a length in a first direction is equal to or less than a subwavelength and a length in a second direction orthogonal to the first direction is equal to or greater than the length in the first direction; and in the plurality of shape elements, a standard deviation of the length in the second direction is larger than a standard deviation of the length in the first direction.

According to the above configuration, the uneven portion on one surface of the thin film layer is covered with the uneven layer, and the uneven portion on the other surface of the thin film layer is covered with the low transmission layer and the adhesive layer. Thus, as compared with a configuration in which the uneven structure of the thin film layer is exposed, deformation of the uneven structure can be prevented. Furthermore, the peelable substrate and the uneven layer are in contact with each other so as to be peelable from each other. Accordingly, after the transfer sheet is bonded to an adherend, the peelable substrate can be peeled off. Thus, the color developing sheet transferred to the adherend is increased in flexibility, and the color developing sheet having a small thickness can be easily formed.

A color developing sheet for solving the above problem is a color developing sheet including: an uneven layer having a surface having an uneven structure; a thin film layer that is located on the uneven structure and has a surface shape following the uneven structure and from which reflected light enhanced by interference emerges; a low transmission layer that is located on a side of the thin film layer opposite to the uneven layer and has a lower transmittance for light in a visible range than the thin film layer; and an adhesive layer that is located on a side of the low transmission layer opposite to the thin film layer, wherein: a projection included in the uneven structure has a shape having one or more steps from a plane in which a base portion of the projection is located; when viewed in a direction perpendicular to the surface of the uneven layer, a pattern composed of the projection includes a pattern composed of a group of a plurality of shape elements in each of which a length in a first direction is equal to or less than a subwavelength and a length in a second direction orthogonal to the first direction is equal to or greater than the length in the first direction; and in the plurality of shape elements, a standard deviation of the length in the second direction is larger than a standard deviation of the length in the first direction.

According to the above configuration, the uneven portion on one surface of the thin film layer is covered with the uneven layer, and the uneven portion on the other surface of the thin film layer is covered with the low transmission layer and the adhesive layer. Thus, as compared with a configuration in which the uneven structure of the thin film layer is exposed, deformation of the uneven structure can be prevented.

A color developing article for solving the above problem is a color developing article including: the color developing sheet; and an adherend to which the color developing sheet is bonded and that is in contact with the adhesive layer.

According to the above configuration, in the color developing sheet, deformation of the uneven structure is prevented, leading to a color developing article including a color developing sheet that suitably provides the desired color development.

A transfer method for solving the above problem is a transfer method including: placing the transfer sheet on a surface of an adherend and adhering the adhesive layer to the adherend; and peeling off the peelable substrate from the uneven layer.

According to the above transfer method, since only the peelable substrate is peeled off while leaving the uneven layer, deformation of the uneven structure of the transferred sheet can be prevented without separately forming a layer for protecting the uneven structure of the thin film layer.

### [Advantageous Effects of the Invention]

According to the present invention, in a color developing sheet, deformation of an uneven structure having an optical function can be prevented.

### [Brief Description of the Drawings]

Fig. 1 is a view showing a cross-sectional structure of a transfer sheet according to a first embodiment of the transfer sheet.
Fig. 2A is a view showing a planar structure of an uneven structure of a first structure in the transfer sheet of the first embodiment.
Fig. 2B is a view showing a cross-sectional structure of the uneven structure of the first structure in the transfer sheet of the first embodiment.
Fig. 3 is a view showing a cross-sectional structure having another configuration of the transfer sheet of the first embodiment.
Fig. 4A is a view showing a planar structure of an uneven structure composed of only second projection elements in the transfer sheet of the first embodiment.
Fig. 4B is a view showing a cross-sectional structure of the uneven structure composed of only the second projection elements in the transfer sheet of the first embodiment.
Fig. 5A is a view showing a planar structure of an uneven structure of a second structure in the transfer sheet of the first embodiment.
Fig. 5B is a view showing a cross-sectional structure of the uneven structure of the second structure in the transfer sheet of the first embodiment.
Fig. 6 is a view showing a transfer method using the transfer sheet of the first embodiment and showing a step of bonding the transfer sheet to an adherend.
Fig. 7 is a view showing a color developing article which is an adherend to which a color developing sheet of the first embodiment is transferred.
Fig. 8 is a view showing a cross-sectional structure of the color developing sheet of the first embodiment.
Fig. 9 is a view showing a cross-sectional structure of a transfer sheet according to a second embodiment of the transfer sheet.
Fig. 10 is a view showing a cross-sectional structure of a color developing sheet of the second embodiment.

### [Description of the Embodiments]

### (First embodiment)

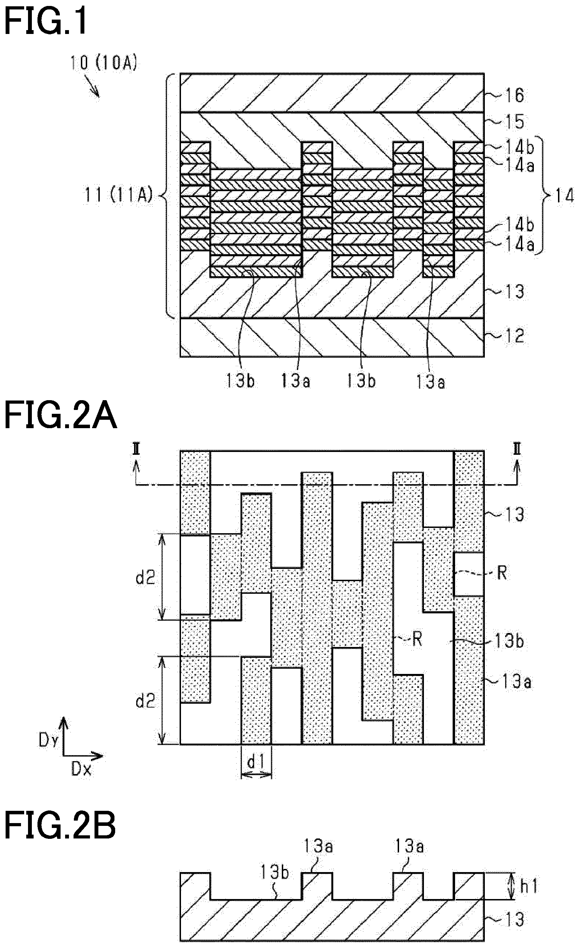

A first embodiment of a transfer sheet, a color developing sheet, a color developing article, and a transfer method will be described with reference to Figs. 1 to 8. The wavelength range of incident light and reflected light on the color developing sheet is not particularly limited, and the following embodiments will describe, as an example, a color developing sheet for light in the visible range. In the following description, light in the visible range refers to light in the wavelength range of 360 nm or more and 830 nm or less.

### [Configuration of transfer sheet]

First, a configuration of the transfer sheet will be described. The transfer sheet is a sheet used to bond a color developing sheet to an adherend. Specifically, the transfer sheet is used to transfer a color developing sheet provided in the transfer sheet to an adherend.

As shown in Fig. 1, a transfer sheet 10 includes a peelable substrate 12, a resin layer 13, which is an example of an uneven layer, a multilayer film layer 14, an absorption layer 15, and an adhesive layer 16. Among these, the resin layer 13, the multilayer film layer 14, the absorption layer 15, and the adhesive layer 16 constitute a color developing sheet 11. That is, the transfer sheet 10 is a laminate of the peelable substrate 12 and the color developing sheet 11.

The peelable substrate 12 is a flat layer, and the peelable substrate 12 is in contact with the resin layer 13 so as to be peelable. The resin layer 13 has an uneven structure on a surface opposite to a surface in contact with the peelable substrate 12. The uneven structure of the resin layer 13 is composed of a plurality of projections 13a that are irregularly arranged and recesses 13b which are regions between the plurality of projections 13a.

The peelable substrate 12 is, for example, a synthetic quartz substrate or a film made of a resin such as polyethylene terephthalate (PET). In terms of increasing flexibility of the transfer sheet 10, the peelable substrate 12 is preferably made of a resin. The peelable substrate 12 has a thickness, for example, in the range of 10 µm or more and 100 µm or less.

The resin layer 13 is made of a resin that transmits light in the visible range, i.e., a resin that is transparent to light in the visible range. The resin constituting the resin layer 13 is, for example, a thermoplastic resin.

The peelable substrate 12 is configured to be peelable from the resin layer 13, for example, by selecting the materials of the peelable substrate 12 and the resin layer 13 to achieve low adhesion between the peelable substrate 12 and the resin layer 13.

The peelable substrate 12 may be configured to be peelable from the resin layer 13, for example, by using the peelable substrate 12 or the resin layer 13 containing a component such as silicone oil or a fluorine compound that functions as a release agent. Alternatively, the peelable substrate 12 may be configured to be peelable from the resin layer 13, for example, by providing a release layer containing a release agent between the peelable substrate 12 and the resin layer 13. In a case where the peelable substrate 12 is peeled off at an interface between the peelable substrate 12 and the release layer, the release layer and the resin layer 13 constitute the uneven layer.

It is preferable that the peelability of the peelable substrate 12 from the resin layer 13 is exhibited by heating or that peeling of the peelable substrate 12 from the resin layer 13 is accelerated by heating. For example, in a case where the resin layer 13 is made of a thermoplastic resin, softening of the resin layer 13 by heating accelerates peeling of the peelable substrate 12 from the resin layer 13.

The multilayer film layer 14 covers the surface of the resin layer 13, and has a surface shape that follows the uneven structure of the resin layer 13. The multilayer film layer 14 is a laminate of a plurality of thin films, and has a structure in which high refractive index layers 14a and low refractive index layers 14b are alternately laminated. The high refractive index layer 14a and the low refractive index layer 14b are each a dielectric thin film. The high refractive index layer 14a has a higher refractive index than the low refractive index layer 14b. For example, the high refractive index layer 14a is a layer in contact with the resin layer 13, and the low refractive index layer 14b is a layer in contact with the absorption layer 15. On the projection 13a and the recess 13b of the resin layer 13, the multilayer film layer 14 has the same configuration, that is, the material, thickness, and the order of lamination of the layers constituting the multilayer film layer 14 are the same.

When light is incident on the multilayer film layer 14, light rays reflected at each interface between the high refractive index layer 14a and the low refractive index layer 14b of the multilayer film layer 14 interfere with each other and change the traveling direction due to the irregular uneven portion on an outermost surface of the multilayer film layer 14; thus, light in a specific wavelength range is emitted in a wide angular range. The specific wavelength range strongly emitted as reflected light is determined by the material and thickness of the high refractive index layer 14a and the low refractive index layer 14b, as well as the width, height, and arrangement of the uneven portion.

The high refractive index layer 14a and the low refractive index layer 14b are made of a material that transmits light in the visible range, i.e., a material that is transparent to light in the visible range. The material of these layers is not limited, as long as the high refractive index layer 14a has a higher refractive index than the low refractive index layer 14b. The greater the difference in the refractive index between the high refractive index layer 14a and the low refractive index layer 14b, the greater the intensity of reflected light can be obtained with a smaller number of laminations. From this viewpoint, for example, in a case where the high refractive index layer 14a and the low refractive index layer 14b are made of an inorganic material, it is preferable that the high refractive index layer 14a is made of titanium dioxide (TiO₂) and the low refractive index layer 14b is made of silicon dioxide (SiO₂). However, the high refractive index layer 14a and the low refractive index layer 14b may be made of an organic material.

The thickness of each of the high refractive index layer 14a and the low refractive index layer 14b may be designed using a transfer matrix method or the like according to a desired color to be developed on the color developing sheet 11. For example, in the case of the color developing sheet 11 that exhibits a blue color, the high refractive index layer 14a made of TiO₂ preferably has a thickness of approximately 40 nm, and the low refractive index layer 14b made of SiO₂ preferably has a thickness of approximately 75 nm.

Fig. 1 shows, as an example, the multilayer film layer 14 composed of 10 layers in which the high refractive index layers 14a and the low refractive index layers 14b are alternately laminated in this order from a position close to the resin layer 13. The number of layers and the order of lamination in the multilayer film layer 14 are not limited thereto, as long as the high refractive index layers 14a and the low refractive index layers 14b are designed to provide reflected light in a desired wavelength range. For example, the multilayer film layer 14 may be configured such that on the low refractive index layer 14b in contact with the resin layer 13, the high refractive index layers 14a and the low refractive index layers 14b are alternately laminated. The layer in contact with the absorption layer 15 may be either the high refractive index layer 14a or the low refractive index layer 14b. Furthermore, the layer in contact with the resin layer 13 and the layer in contact with the absorption layer 15 may be made of the same material, as long as the low refractive index layers 14b and the high refractive index layers 14a are alternately laminated. The multilayer film layer 14 may be composed of a combination of three or more layers having different refractive indices.

In short, the multilayer film layer 14 may be configured such that adjacent layers have different refractive indices, and so that, of light incident on the multilayer film layer 14, the reflectance of light in a specific wavelength range is higher than the reflectance of light in other wavelength ranges.

The absorption layer 15 and the adhesive layer 16 are located on a side of the multilayer film layer 14 opposite to the resin layer 13. The absorption layer 15 covers the uneven portion on the outermost surface of the multilayer film layer 14. The absorption layer 15 has light absorption properties of absorbing light transmitted through the multilayer film layer 14. The absorption layer 15 has a lower visible light transmittance than the multilayer film layer 14. For example, the absorption layer 15 is a layer containing a material such as a light absorber or a black pigment that absorbs light in the visible range. Specifically, the absorption layer 15 is preferably a layer obtained by mixing, with a resin, a black inorganic pigment such as carbon black, titanium black, black iron oxide, or black composite oxide. The absorption layer 15 has a thickness, for example, in the range of 1 µm or more and 10 µm or less.

The adhesive layer 16 is in contact with the absorption layer 15 on the opposite surface of the absorption layer 15 to that in contact with the multilayer film layer 14, and constitutes the outermost surface of the transfer sheet 10 and the outermost surface of the color developing sheet 11. The adhesive layer 16 has adhesion properties that are exhibited by heating. In other words, the adhesive layer 16 has heat sealability. Examples of a heat-sealing agent that constitutes the adhesion layer 16 include thermoplastic resins such as polyethylene, polyvinyl acetate, acrylic resins, polyamide, polyester, polypropylene, and polyurethane. The adhesive layer 16 has a thickness, for example, in the range of 10 µm or more and 100 µm or less.

### [Configuration of uneven structure]

The uneven structure of the resin layer 13 will be described in detail. The uneven structure can be either of two structures, i.e., a first structure and a second structure. Each of the two structures will be described. Fig. 1 shows a color developing sheet 11A and a transfer sheet 10A having an uneven structure of the first structure.

### <First structure>

The uneven structure of the first structure will be described in detail with reference to Figs. 2A and 2B. Fig. 2A is a plan view of the resin layer 13 viewed in a direction perpendicular to the surface of the resin layer 13, and Fig. 2B is a view showing a cross-sectional structure of the resin layer 13 taken along line II-II in Fig. 2A. In Fig. 2A, the projections 13a constituting the uneven structure is indicated by dots.

As shown in Fig. 2A, a first direction Dx and a second direction Dy are directions in a plane in which the resin layer 13 extends, and the first direction Dx is orthogonal to the second direction Dy. The plane is a surface orthogonal to the thickness direction of the resin layer 13.

When the resin layer 13 is viewed in the direction perpendicular to the surface of the resin layer 13, a pattern composed of the projection 13a is a pattern composed of a set of a plurality of rectangles R indicated by dashed lines. The rectangle R is an example of a shape element. The rectangle R has a shape extending in the second direction Dy, and in the rectangle R, a length d2 in the second direction Dy is equal to or greater than a length d1 in the first direction Dx. The plurality of rectangles R are arranged so as not to overlap with each other in either the first direction Dx or the second direction Dy.

In the plurality of rectangles R, the length d1 in the first direction Dx is constant. The plurality of rectangles R are arranged in the first direction Dx at an arrangement interval of length d1, that is, the rectangles R are arranged with a period of length d1.

On the other hand, in the plurality of rectangles R, the length d2 in the second direction Dy is not constant, and the length d2 of the rectangle R is a value selected from a population having a predetermined standard deviation. This population preferably follows a normal distribution. For example, the pattern composed of the plurality of rectangles R is formed, for example, by temporarily placing, in a predetermined region, a plurality of rectangles R having the length d2 distributed with a predetermined standard deviation and then determining according to a predetermined probability whether to actually arrange each of the rectangles R to set a region in which the rectangle R is arranged and a region in which no rectangle R is arranged. In order to efficiently scatter the reflected light from the multilayer film layer 14, the length d2 preferably has a distribution with an average value of 4.13 µm or less and a standard deviation of 1 µm or less.

The region in which the rectangle R is arranged is a region in which the projection 13a is arranged. When adjacent rectangles R are in contact with each other, a single projection 13a is arranged in a single region obtained by combining regions in which the rectangles R are arranged. In such a configuration, the length of the projection 13a in the first direction Dx is an integral multiple of the length d1 of the rectangle R.

In order to prevent occurrence of a rainbow spectrum due to the uneven portion of the multilayer film layer 14, the length d1 of the rectangle R in the first direction Dx is set to be equal to or less than the wavelength of light in the visible range. In other words, the length d1 is a length equal to or less than a subwavelength, i.e., a length equal to or less than the wavelength range of incident light. That is, the length d1 is preferably 830 nm or less, and more preferably 700 nm or less. Furthermore, the length d1 is preferably smaller than the peak wavelength of light in the specific wavelength range reflected at the multilayer film layer 14. For example, when a blue color is to be developed on the color developing sheet 11, the length d1 is preferably about 300 nm, when a green color is to be developed on the color developing sheet 11, the length d1 is preferably about 400 nm, and when a red color is to be developed on the color developing sheet 11, the length d1 is preferably about 460 nm.

In order to allow the reflected light from the multilayer film layer 14 to be widely spread, that is, in order to enhance the scattering effect of the reflected light, the uneven structure preferably has many projecting and recessed portions. When viewed in the direction perpendicular to the surface of the resin layer 13, the ratio of the area of the projection 13a per unit area is preferably in the range of 40% or more and 60% or less. For example, when viewed in the direction perpendicular to the surface of the resin layer 13, the ratio of the area of the projection 13a to the area of the recess 13b per unit area is preferably 1:1.

As shown in Fig. 2B, a height h1 of the projection 13a is constant, and the projection 13a has a shape having a single step from a plane in which a base portion of the projection 13a is located. The height h1 of the projection 13a may be set according to a desired color to be developed on the color developing sheet 11, i.e., the wavelength range of light desired to be reflected at the color developing sheet 11. When the height h1 of the projection 13a is larger than the height of the surface roughness of the multilayer film layer 14 on each of the projection 13a and the recess 13b, the scattering effect of the reflected light is obtained.

However, in order to prevent light interference caused by reflection on the uneven portion of the multilayer film layer 14, the height h1 is preferably 1/2 or less of the wavelength of light in the visible range, that is, the height h1 is preferably 413 nm or less. In order to prevent light interference, the height h1 is more preferably 1/2 or less of the peak wavelength of light in the specific wavelength range reflected at the multilayer film layer 14.

If the height h1 is excessively large, the multilayer film layer 14 has an excessively high scattering effect of the reflected light, and the reflected light tends to have a low intensity. Thus, when the reflected light is light in the visible range, the height h1 is preferably in the range of 10 nm or more and 200 nm or less. For example, in a developing sheet 11 that exhibits a blue color, the height h1 is preferably in the range of approximately 40 nm or more and 130 nm or less in order to allow light to be effectively spread, and the height h1 is preferably 100 nm or less in order to prevent the scattering effect from becoming too high.

The rectangles R may be arranged so that two rectangles R arranged in the first direction Dx partially overlap with each other to constitute the pattern of the projection 13a. That is, the plurality of rectangles R may be arranged in the first direction Dx at an arrangement interval smaller than the length d1, and the arrangement interval of the rectangles R may not necessarily be constant. In a portion in which rectangles R overlap with each other, a single projection 13a is located in a single region obtained by combining regions in which the rectangles R are arranged. In this case, the length of the projection 13a in the first direction Dx is different from an integral multiple of the length d1 of the rectangle R. The length d1 of the rectangle R may not necessarily be constant, as long as the length d2 is equal to or greater than the length d1 of the rectangle R and the standard deviation of the length d2 is larger than the standard deviation of the length d1 in the plurality of rectangles R. This configuration also allows the multilayer film layer 14 to have the scattering effect of the reflected light.

### <Second structure>

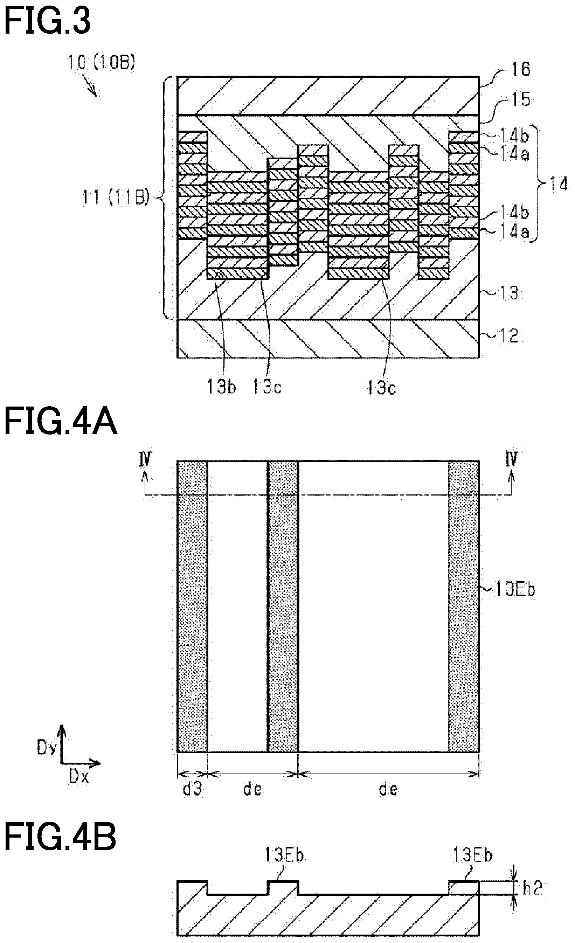

Fig. 3 shows a color developing sheet 11B and a transfer sheet 10B having an uneven structure of the second structure. The configuration in which the resin layer 13 has the uneven structure of the first structure is the same as the configuration in which the resin layer 13 has the uneven structure of the second structure, except for the configuration of the uneven structure of the color developing sheet 11 and the transfer sheet 10.

A projection 13c that constitutes the uneven structure of the second structure has a structure in which a first projection element and a second projection element are superimposed in the thickness direction of the resin layer 13. The first projection element has the same structure as the projection 13a of the first structure, and the second projection element extends in a strip shape.

In the color developing sheet 11 having the uneven structure of the first structure, the scattering effect of the reflected light achieves a gradual change in the color visually recognized depending on the observation angle; however, the vividness of the color visually recognized is reduced due to a decrease in the intensity of the reflected light caused by scattering. Depending on the application or the like of the color developing sheet, in some cases, the sheet is required to allow more vivid color to be observed in a wide observation angular range. The second projection element of the second structure is arranged so that the incident light is strongly diffracted in a specific direction. Thus, a light scattering effect based on the first projection element and a light diffraction effect based on the second projection element achieve a color developing sheet that allows more vivid color to be observed in a wide observation angular range.

A configuration of the second projection element will be described with reference to Figs. 4A and 4B. Fig. 4A is a plan view of an uneven structure composed of only the second projection elements, and Fig. 4B is a view showing a cross-sectional structure taken along line IV-IV in Fig. 4A. In Fig. 4A, the second projection element is indicated by dots.

As shown in Fig. 4A, in a plan view, a second projection element 13Eb has a strip shape extending in the second direction Dy with a constant width, and a plurality of second projection elements 13Eb are arranged at intervals in the first direction Dx. In other words, a pattern composed of the second projection element 13Eb is a pattern composed of a plurality of strip-shaped regions that extend in the second direction Dy and are arranged in the first direction Dx. A length d3 of the second projection element 13Eb in the first direction Dx may be the same or different from the length d1 of the rectangle R that determines a pattern of the first projection element.

An arrangement interval de of the second projection elements 13Eb in the first direction Dx, i.e., an arrangement interval of the strip-shaped regions in the first direction Dx, is set so that at least part of the reflected light from the surface of the uneven structure composed of the second projection elements 13Eb is observed as first-order diffracted light. The first-order diffracted light is, in other words, diffracted light whose diffraction order m is 1 or -1. That is, the arrangement interval de satisfies de ≥ λ(sinθ + sincp), where θ represents the incident angle of the incident light, ϕ represents the reflection angle of the reflected light, and λ represents the wavelength of the diffracted light. For example, when visible light in which λ = 360 nm is targeted, the arrangement interval de of the second projection elements 13Eb may be 180 nm or more, that is, the arrangement interval de may be 1/2 or more of the minimum wavelength in the wavelength range of the incident light. The arrangement interval de is a distance between the sides of two adjacent second projection elements 13Eb in the first direction Dx, and is a distance between the sides located on the same side of the second projection elements 13Eb in the first direction Dx.

The periodicity of the pattern composed of the second projection element 13Eb is reflected in the periodicity of the uneven structure of the resin layer 13. When the arrangement interval de of the plurality of second projection elements 13Eb is constant, due to a diffraction phenomenon from the outermost surface of the multilayer film layer 14, reflected light of a specific wavelength is emitted at a specific angle from the multilayer film layer 14. The light generated due to diffraction has a much higher reflection intensity than the reflected light generated due to the light scattering effect based on the first projection element; thus, light having a luster such as a metallic luster is visually recognized. However, diffraction causes dispersion of light, and the color visually recognized changes according to the change in the observation angle.

Thus, for example, even when the first projection element is designed to have a structure that allows the color developing sheet to exhibit a blue color, if the arrangement interval de of the second projection elements 13Eb is a constant value in the range of approximately 400 nm to 5 µm, light in the range from strong green to red may be observed by surface reflection due to diffraction depending on the observation angle. On the other hand, for example, if the arrangement interval de of the second projection elements 13Eb is as large as approximately 50 µm, light in the visible range is diffracted in a smaller angular range and thus a change in the color due to diffraction is less likely to be visually recognized; however, light having a luster such as a metallic luster is observed only at a specific observation angle.

Thus, when the arrangement interval de is not set to a constant value and the pattern of the second projection element 13Eb is set to a pattern in which a plurality of periodic structures having different periods are superimposed, light of a plurality of wavelengths is mixed with the reflected light due to diffraction, and accordingly, dispersed light with high monochromaticity is less likely to be visually recognized. Thus, glossy and vivid color is observed in a wide observation angular range. In this case, the arrangement interval de is selected, for example, from the range of 360 nm or more and 5 µm or less, and the average value of the arrangement intervals de of the plurality of second projection elements 13Eb may be 1/2 or more of the minimum wavelength in the wavelength range of the incident light.

However, as the arrangement interval de has a larger standard deviation, the arrangement of the second projection elements 13Eb becomes more irregular and the scattering effect becomes dominant, and accordingly, strong reflection due to diffraction is less likely to be achieved. Thus, the arrangement interval de of the second projection elements 13Eb is preferably determined according to the angular range in which light is spread due to the light scattering effect based on the first projection element so that the reflected light due to diffraction is emitted in approximately the same angular range as the angular range for the above scattered light. For example, when blue reflected light is emitted with a spread within a range of ±40° with respect to the incident angle, the arrangement interval de in the pattern of the second projection element 13Eb is set to have an average value in the range of approximately 1 µm or more and 5 µm or less, and have a standard deviation of approximately 1 µm. Thus, reflected light is generated due to diffraction in approximately the same angular range as the angular range in which light is spread due to the light scattering effect based on the first projection element.

That is, unlike a structure for extracting light in a specific wavelength range after diffraction, the uneven structure based on the plurality of second projection elements 13Eb is a structure for allowing light in various wavelength ranges to emerge in a predetermined angular range by using diffraction due to dispersion of the arrangement interval de.

In order to cause a longer-period diffraction phenomenon, the pattern of the second projection element 13Eb may be configured such that a unit region is a square region having a side length in the range of 10 µm or more and 100 µm or less, and that the arrangement interval de in the pattern of the second projection element 13Eb for each unit region is set to have an average value in the range of approximately 1 µm or more and 5 µm or less, and have a standard deviation of approximately 1 µm. A plurality of unit regions may include a region in which the arrangement interval de is a constant value in the range of 1 µm or more and 5 µm or less. Even if there is a unit region in which the arrangement interval de is constant, when the arrangement interval de varies with a standard deviation of approximately 1 µm in any of unit regions adjacent to the unit region, an effect equivalent to that of the configuration in which the arrangement interval de varies in all the unit regions can be expected within the resolution of the human eye.

The second projection element 13Eb shown in Fig. 4A has a periodicity associated with the arrangement interval de only in the first direction Dx. The light scattering effect based on the first projection element mainly acts on the reflected light in a direction along the first direction Dx, but can also partially affect the reflected light in a direction along the second direction Dy, as viewed in a direction perpendicular to the outermost surface of the multilayer film layer 14. Thus, the second projection element 13Eb may have a periodicity also in the second direction Dy. That is, the pattern of the second projection element 13Eb may be a pattern in which a plurality of strip-shaped regions extending in the second direction Dy are arranged in each of the first direction Dx and the second direction Dy.

In such a pattern of the second projection element 13Eb, for example, the arrangement interval of the strip-shaped regions in the first direction Dx and the arrangement interval of the strip-shaped regions in the second direction Dy may vary with each average value being in the range of 1 µm or more and 100 µm or less. Depending on the difference between the effect of the light scattering effect based on the first projection element on the first direction Dx and the effect of the light scattering effect on the second direction Dy, the average value of the arrangement intervals in the first direction Dx may be different from the average value of the arrangement intervals in the second direction Dy, and the standard deviation of the arrangement interval in the first direction Dx may be different from the standard deviation of the arrangement interval in the second direction Dy.

As shown in Fig. 4B, a height h2 of the second projection element 13Eb needs to be larger than the height of the surface roughness of the multilayer film layer 14 on each of the projection 13c and the recess 13b. However, as the height h2 is increased, the diffraction effect based on the second projection element 13Eb becomes dominant in the effect of the uneven structure on the reflected light, and accordingly, the light scattering effect based on the first projection element is less likely to be achieved. Thus, the height h2 is preferably approximately the same as the height h1 of the first projection element, and the height h2 may be the same as the height h1. For example, the height h1 of the first projection element and the height h2 of the second projection element 13Eb are preferably in the range of 10 nm or more and 200 nm or less. In a developing sheet 11 that exhibits a blue color, the height h1 of the first projection element and the height h2 of the second projection element 13Eb are preferably in the range of 10 nm or more and 130 nm or less.

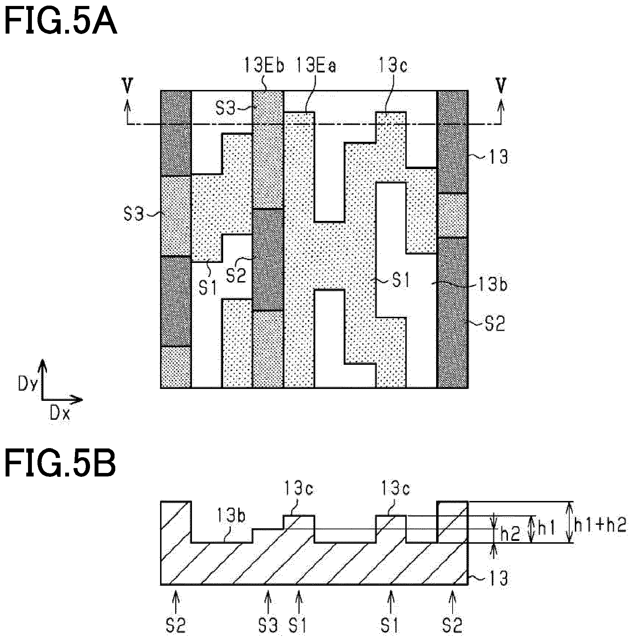

The uneven structure of the second structure will be described in detail with reference to Figs. 5A and 5B. Fig. 5A is a plan view of the resin layer 13 viewed in the direction perpendicular to the surface of the resin layer 13, and Fig. 5B is a view showing a cross-sectional structure of the resin layer 13 taken along line V-V in Fig. 5A. In Fig. 5A, a pattern composed of the first projection element and a pattern composed of the second projection element are indicated by dots with different densities.

As shown in Fig. 5A, when the resin layer 13 is viewed in the direction perpendicular to the surface of the resin layer 13, a pattern composed of the projection 13c is a pattern in which a first pattern composed of first projection element 13Ea and a second pattern composed of the second projection element 13Eb are superimposed. That is, regions in which the projection 13c is located include a region S1 that is composed of only the first projection element 13Ea, a region S2 in which the first projection element 13Ea and the second projection element 13Eb are superimposed, and a region S3 that is composed of only the second projection element 13Eb. In Fig. 5A, the first projection element 13Ea and the second projection element 13Eb are superimposed so that the sides of the first projection element 13Ea and the second projection element 13Eb are aligned with each other in the first direction Dx. However, the configuration is not limited to this, and the sides of the first projection element 13Ea and the second projection element 13Eb may not necessarily be aligned with each other.

As shown in Fig. 5B, in the region S1, the height of the projection 13c is the height h1 of the first projection element 13Ea. In the region S2, the height of the projection 13c is the sum of the height h1 of the first projection element 13Ea and the height h2 of the second projection element 13Eb. In the region S3, the height of the projection 13c is the height h2 of the second projection element 13Eb. Thus, the projection 13c has multi-stage shape in which the first projection element 13Ea and the second projection element 13Eb are superimposed in the height direction. The first projection element 13Ea has the predetermined height hi, and a projected image of the first projection element 13Ea in the thickness direction of the resin layer 13 constitutes the first pattern. The second projection element 13Eb has the predetermined height h2, and a projected image of the second projection element 13Eb in the thickness direction constitutes the second pattern. The projection 13c can be considered to have a structure in which the second projection element 13Eb is laminated on the first projection element 13Ea from the position of a base portion of the projection 13c, or a structure in which the first projection element 13Ea is laminated on the second projection element 13Eb from the position of the base portion of the projection 13c.

The pattern composed of the first projection element 13Ea and the pattern composed of the second projection element 13Eb may be arranged so that the first projection element 13Ea and the second projection element 13Eb are not superimposed. This structure also achieves the light diffusion effect based on the first projection element 13Ea and the light diffraction effect based on the second projection element 13Eb. However, when the first projection element 13Ea and the second projection element 13Eb are arranged so as not to be superimposed with each other, as compared with the first structure, the area of the region per unit area in which the first projection element 13Ea can be arranged is reduced, and accordingly, the light diffusion effect is reduced. Thus, in order to enhance the light diffusion effect based on the projection element 13Ea and the light diffraction effect based on the projection element 13Eb, as shown in Fig. 5A, the projection 13c preferably has a multi-stage shape in which the first projection element 13Ea and the second projection element 13Eb are superimposed.

### [Method of producing transfer sheet]

A method of producing the transfer sheet 10 will be described.

First, the resin layer 13 is formed on the peelable substrate 12. The method of forming the uneven structure of the resin layer 13 is, for example, a nanoimprint method. For example, when the uneven structure of the resin layer 13 is formed by a photo-nanoimprint method, a coating liquid containing the material of the resin layer 13 is applied to the surface of the mold having the uneven shape. The mold is formed by having the uneven portion reversed from the uneven portion to be informed. The mold is an example of an intaglio plate. As the material of the resin layer 13, a photocurable resin is used. The method of applying the coating liquid is not particularly limited, and may be a known coating method such as an ink jet method, a spray method, a bar coating method, a roll coating method, a slit coating method, or a gravure coating method.

Then, the peelable substrate 12 is stacked on a surface of the layer made of the coating liquid, and while the peelable substrate 12 and the mold are pressed against each other, the layer is irradiated with light from a side on which the peelable substrate 12 is located or a side on which the mold is located. Subsequently, the mold is released from the layer made of cured resin and the peelable substrate 12. Thus, the uneven shape of the mold is transferred to the resin to form the resin layer 13 whose surface has the uneven shape and form a laminate of the peelable substrate 12 and the resin layer 13. The mold may be made of, for example, synthetic quartz or silicon, and is formed by a known microfabrication technique such as lithography using irradiation with light or a charged particle beam, or dry etching.

The coating liquid may be applied to the surface of the peelable substrate 12, and while the mold is pressed against the layer made of the coating liquid on the peelable substrate 12, the layer may be irradiated with light. Furthermore, instead of the photo-nanoimprint method, a thermal nanoimprint method may be used.

Subsequently, the layers that constitute the multilayer film layer 14 are sequentially laminated on the surface of the resin layer 13 having the uneven shape. In a case where the high refractive index layer 14a and the low refractive index layer 14b constituting the multilayer film layer 14 are made of an inorganic material, the high refractive index layer 14a and the low refractive index layer 14b are each formed by using a known thin film formation technique such as sputtering, vacuum deposition, or an atomic layer deposition method. In a case where the high refractive index layer 14a and the low refractive index layer 14b are made of an organic material, the high refractive index layer 14a and the low refractive index layer 14b may be formed by a known technique such as self-organization.

Subsequently, the absorption layer 15 is formed on the upper surface of the multilayer film layer 14. The absorption layer 15 may be formed, for example, by using a known coating method such as an ink jet method, a spray method, a bar coating method, a roll coating method, a slit coating method, or a gravure coating method. A coating liquid for forming the absorption layer 15 may be mixed with a solvent, if necessary. The solvent may be a solvent that is compatible with the resin constituting the absorption layer 15. Examples of the solvent include ethyl acetate, butyl acetate, ethylene glycol monomethyl ether, toluene, xylene, methylcyclohexane, ethylcyclohexane, acetone, methyl ethyl ketone, methyl isobutyl ketone, and diisobutyl ketone.

Subsequently, the adhesion layer 16 is formed on the upper surface of the absorption layer 15. The adhesion layer 16 is formed, for example, by using a known coating method such as an ink jet method, a spray method, a bar coating method, a roll coating method, a slit coating method, or a gravure coating method. In this manner, the transfer sheet 10 is formed.

### [Color developing sheet and Molding]

A configuration of the color developing sheet 11 and a color developing article will be described while explaining a method of transferring the color developing sheet 11 from the transfer sheet 10 to an adherend. The color developing article is an article including an adherend and the color developing sheet 11. The color developing sheet 11 may be used, for example, for the purpose of enhancing the designability of articles, or for the purpose of increasing the difficulty of counterfeiting articles. The color developing sheet 11 may be used for both purposes.

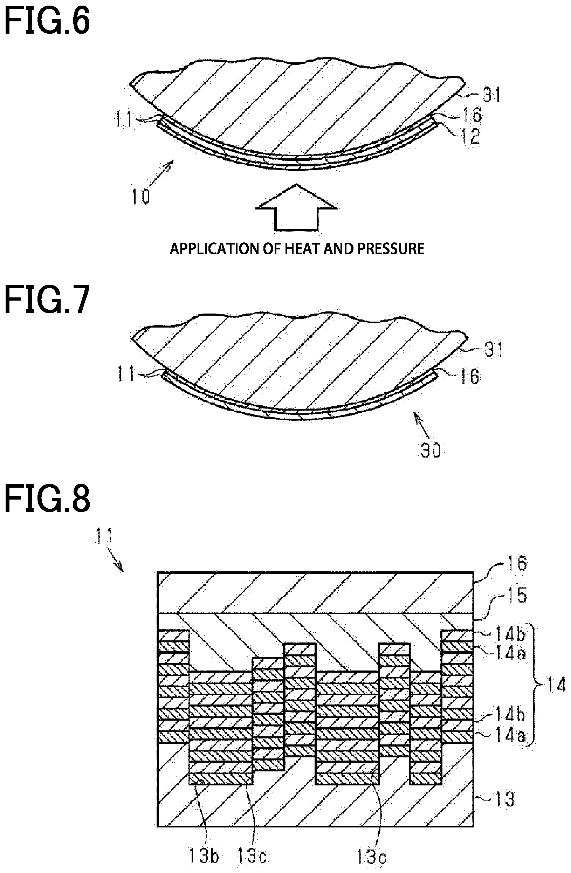

As shown in Fig. 6, first, the transfer sheet 10 is placed on a surface of an adherend 31 so that the adhesive layer 16 is in contact with the adherend 31, and the transfer sheet 10 is subjected to application of heat and pressure. For example, a heated pressing member such as a stamp is pressed against the transfer sheet 10 from a side opposite to the adherend 31 to apply heat and pressure to the transfer sheet 10. Thus, the adhesive layer 16 exhibits adhesiveness, and the adhesive layer 16 is adhered to the surface of the adherend 31. That is, the transfer sheet 10 is bonded to the adherend 31. While the transfer sheet 10 is fixed to the adherend 31, the peelable substrate 12 faces the outside.

The shape and material of the adherend 31 are not particularly limited, and the adherend 31 may be, for example, a resin molded product such as a card or a three-dimensional object, or may be a piece of paper. In short, the adherend 31 needs to have a surface to which the adhesive layer 16 can be adhered.

As shown in Fig. 7, subsequently, in the transfer sheet 10, the peelable substrate 12 is peeled off from the resin layer 13. Thus, the color developing sheet 11 is transferred from the transfer sheet 10 to the adherend 31. That is, a color developing article 30 is formed in which the color developing sheet 11 is fixed to the surface of the adherend 31.

As shown in Fig. 8, in the color developing sheet 11 after being transferred to the adherend 31, the surface of the resin layer 13 opposite to the surface having the uneven structure constitutes the outermost surface of the color developing sheet 11, and is exposed to the outside air. The adhesive layer 16 constitutes the outermost surface of the color developing sheet 11 on the side opposite to the above-described outermost surface of the color developing sheet 11 constituted by the resin layer 13, and the adhesive layer 16 is in contact with the adherend 31. The color developing sheet 11 is observed from a side of the multilayer film layer 14 on which the resin layer 13 is located. Fig. 8 shows, as an example, the color developing sheet 11 having the uneven structure of the second structure.

### [Effects]

Effects of the first embodiment will be described. In the transfer sheet 10 of the first embodiment, the peelable substrate 12 and the resin layer 13 are configured to be peelable from each other, and during transfer of the color developing sheet 11, only the peelable substrate 12 is peeled off. Thus, in the color developing sheet 11 after the transfer, one of the uneven structures on the front and rear surfaces of the multilayer film layer 14 that is located closer to the resin layer 13, i.e., the uneven structure constituting the surface of the multilayer film layer 14 located closer to an observer, is covered with the resin layer 13. Furthermore, one of the uneven structures on the front and rear surfaces of the multilayer film layer 14 that is located closer to the adhesive layer 16, i.e., the uneven structure constituting the surface of the multilayer film layer 14 located farther from the observer, is covered with the absorption layer 15 and the adhesive layer 16. Accordingly, the uneven structures of the multilayer film layer 14 are protected. Thus, as compared with a configuration in which the uneven structures are exposed to the outside, deformation of the uneven structures of the multilayer film layer 14 having an optical function can be prevented.

The color developing sheet 11 does not have the peelable substrate 12 which is a substrate used during production of the transfer sheet, and accordingly, the color developing sheet 11 is increased in flexibility. Thus, even when the surface of the adherend 31 has a curved surface, the color developing sheet 11 easily follows the surface of the adherend 31. As a result, a load applied to the color developing sheet 11 for making the color developing sheet 11 follow the surface of the adherend 31 can be reduced, and the color developing sheet 11 is prevented from being peeled off from the adherend 31. Furthermore, the color developing sheet 11 has a smaller thickness than in the case where the color developing sheet 11 includes the substrate used during production of the transfer sheet. This prevents rising of a portion of the color developing article 30 to which the color developing sheet 11 is bonded. Thus, for example, when the color developing sheet 11 is used for decoration, the decorativeness can be enhanced.

The multilayer film layer 14 is formed of a material that is transparent to light in the visible region, and accordingly, the multilayer film layer 14 transmits part of light in the wavelength range of the incident light other than a specific wavelength range which is the wavelength range of light reflected at the multilayer film layer 14. The wavelength range of the transmitted light is different from the wavelength range of the reflected light from the multilayer film layer 14, and the color of the transmitted light is mainly a complementary color of the color of the reflected light. Thus, when such transmitted light is visually recognized, the visibility of the color due to the reflected light is reduced.

In the present embodiment, the color developing sheet 11 includes the absorption layer 15, and accordingly, light transmitted through the multilayer film layer 14 is absorbed by the absorption layer 15. This prevents the transmitted light from being reflected at the surface of the adherend 31 or the like and emerging toward the resin layer 13. Thus, when viewed in the direction perpendicular to the resin layer 13, light in a wavelength range different from that of the reflected light from the multilayer film layer 14 is prevented from being visually recognized, and accordingly, reduction in the visibility of the color due to the reflected light is prevented. Thus, the color developing sheet 11 suitably provides the desired color development.

In the first embodiment, the multilayer film layer 14 is a thin film layer, and the absorption layer 15 is a low transmission layer. The first embodiment can achieve the following effects.
(1) In the color developing sheet 11, the uneven portion on one surface of the thin film layer is covered with the resin layer 13, and the uneven portion on the other surface of the thin film layer is covered with the low transmission layer and the adhesive layer 16. Thus, as compared with a configuration in which the uneven structure of the thin film layer is exposed, deformation of the uneven structure can be prevented. Furthermore, during transfer of the color developing sheet 11, the peelable substrate 12 which is the substrate used during production of the transfer sheet is peeled off. Thus, the color developing sheet 11 is increased in flexibility, and the color developing sheet 11 having a small thickness can be easily formed.
(2) The thin film layer is the multilayer film layer 14 which is a laminate of a plurality of thin films adjacent ones of which
   have different refractive indices from each other, and accordingly, reflected light enhanced by interference of light reflected at each interface of the multilayer film emerges from the thin film layer. Thus, the reflected light has a higher intensity than in the case where the thin film layer is a monolayer.
(3) The color developing sheet 11 includes the absorption layer 15 that absorbs light transmitted through the multilayer film layer 14. Thus, when viewed in the direction perpendicular to the resin layer 13, light in a wavelength range different from that of the reflected light from the multilayer film layer 14 is prevented from being visually recognized. This prevents reduction in the visibility of the color due to the reflected light.
(4) The adhesive layer 16 exhibits adhesiveness by being heated, and accordingly, the color developing sheet 11 can be bonded to the adherend 31 by thermal transfer. Thus, the color developing sheet 11 can be transferred by using a transfer method with high versatility.
(5) In the configuration in which the resin layer 13 is made of a thermoplastic resin, during thermal transfer, the peelable substrate 12 can be easily peeled off from the resin layer 13.
(6) In the configuration in which the resin layer 13 has the uneven structure of the first structure, the uneven structure achieves the reflected light diffusion effect; thus, light in a specific wavelength range is observed in a wide angular range as the reflected light from the multilayer film layer 14.
(7) In the configuration in which the resin layer 13 has the uneven structure of the second structure, the uneven structure achieves the reflected light diffusion effect and the reflected light diffraction effect. Thus, as the reflected light from the multilayer film layer 14, light in a specific wavelength range can be observed in a wide observation angular range, and due to a higher intensity of the reflected light, glossy and vivid color is visually recognized.

### (Second embodiment)

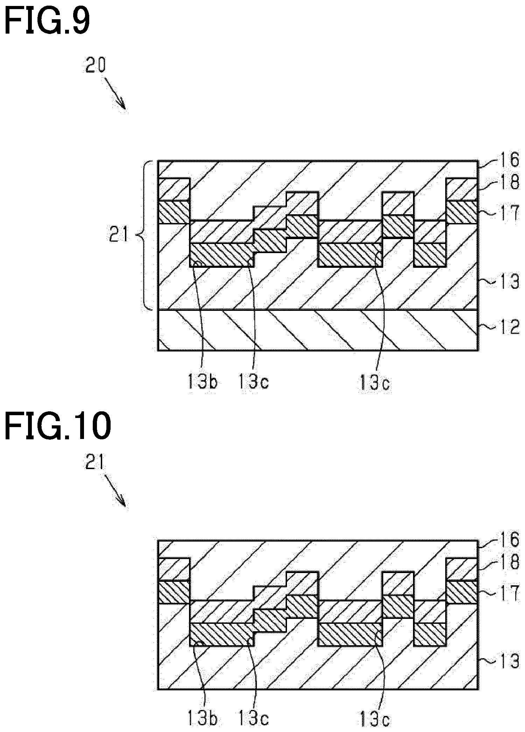

A second embodiment of the transfer sheet, the color developing sheet, the color developing article, and the transfer method will be described with reference to Figs. 9 and 10. In the following, differences between the second embodiment and the first embodiment mainly will be described, and the same components as in the first embodiment are given the same reference numerals and will not be described.

As shown in Fig. 9, unlike the transfer sheet 10 of the first embodiment, a transfer sheet 20 of the second embodiment includes a monolayer film layer 17 instead of the multilayer film layer 14 and includes a reflection layer 18 instead of the absorption layer 15. That is, the transfer sheet 20 includes the peelable substrate 12, the resin layer 13, the monolayer film layer 17, the reflection layer 18, and the adhesive layer 16 in this order. Among these, the resin layer 13, the monolayer film layer 17, the reflection layer 18, and the adhesive layer 16 constitute a color developing sheet 21.

Also in the second embodiment, the uneven structure of the resin layer 13 can be either the first structure or the second structure described in the first embodiment. Figs. 9 and 10 show, as an example, a configuration in which the resin layer 13 has the uneven structure of the second structure. The peelable substrate 12, the resin layer 13, and the adhesive layer 16 of the second embodiment have the same configuration as in the first embodiment.

The monolayer film layer 17 covers the surface of the resin layer 13, and has a surface shape that follows the uneven structure of the resin layer 13. The monolayer film layer 17 is a layer composed of a monolayer thin film made of a dielectric.

When light is incident on the monolayer film layer 17, reflected light due to thin film interference emerges from the monolayer film layer 17. Specifically, light rays reflected at the front and rear surfaces of the monolayer film layer 17 interfere with each other, and light in a specific wavelength range enhanced by the interference emerges from the monolayer film layer 17.

The wavelength range of the reflected light due to the monolayer thin film interference does not have a peak as sharp as that of the wavelength range of the reflected light due to multilayer film interference. However, when the monolayer film layer 17 is designed so that the wavelength range of the reflected light includes a wavelength range at the end of the visible range and a portion outside the end of the visible range, for example, a wavelength range from a short wavelength range of the visible range to part of the ultraviolet range, an observer can visually recognize, as the reflected light from the monolayer film layer 17, a specific color corresponding to the short wavelength range of the visible range.

The material and thickness of the monolayer film layer 17 may be selected according to a desired color to be developed on the color developing sheet 21. The monolayer film layer 17 may be made of, for example, any material selected from an inorganic oxide, an inorganic nitride, and an inorganic oxynitride. The thickness of the monolayer film layer 17 is selected, for example, from the range of 10 nm or more and 1000 nm or less.

The reflection layer 18 is in contact with the monolayer film layer 17 on a surface of the monolayer film layer 17 opposite to that in contact with the resin layer 13. The reflection layer 18 reflects light transmitted through the monolayer film layer 17. At an interface between the monolayer film layer 17 and the reflection layer 18, a higher light reflectance is more preferable, and the monolayer film layer 17 and the reflection layer 18 are preferably configured such that specular reflection occurs at a high rate at the interface between these layers. In other words, it is preferable that light transmission through the reflection layer 18 is low and reflection of light at the interface between the monolayer film layer 17 and the reflection layer 18 is high and that the surface of the reflection layer 18 has a metallic luster.

Specifically, for light in the wavelength range of light reflected at the interface between the monolayer film layer 17 and the reflection layer 18, a refractive index n2 of the reflection layer 18 is preferably higher than a refractive index n1 of the monolayer film layer 17, and an extinction coefficient k1 of the monolayer film layer 17 is preferably 1 or less and an extinction coefficient k2 of the reflection layer 18 is preferably larger than 1. Thus, light that is transmitted through the monolayer film layer 17 and enters the reflection layer 18 is absorbed by the reflection layer 18, and as a result, the color visually recognized is less affected by the reflection at an interface between the reflection layer 18 and the adhesive layer 16 or an interface between the adhesive layer 16 and the adherend 31, which is preferable. The reflection layer 18 preferably has a lower visible light transmittance than the monolayer film layer 17, and preferably has a visible light transmittance of 30% or less. With this configuration, a high reflectance is obtained at the interface between the monolayer film layer 17 and the reflection layer 18, and light that is transmitted through the monolayer film layer 17 and enters the reflection layer 18 is absorbed by the reflection layer 18; thus, the reflected light from the color developing sheet 21 has more vivid color.

If the reflection layer 18 is not provided, the reflected light due to the thin film interference from the monolayer film layer 17 has a lower intensity than the reflected light due to multilayer film interference from the multilayer film layer 14 of the first embodiment. When the reflection layer 18 is laminated on the monolayer film layer 17, the reflected light has a higher intensity, leading to an improvement in the visibility of the reflected light, i.e., the visibility of a specific color due to the thin film interference.

In order to achieve the monolayer film layer 17 and the reflection layer 18 having such a configuration, in a case where the monolayer film layer 17 is made of any material selected from an inorganic oxide, an inorganic nitride, and an inorganic oxynitride, the reflection layer 18 is preferably made of a metal material. Examples of a preferable configuration of the monolayer film layer 17 and the reflection layer 18 include a configuration in which the monolayer film layer 17 is made of titanium oxide and the reflection layer 18 is made of titanium and a configuration in which the monolayer film layer 17 is made of zirconium oxide and the reflection layer 18 is made of zirconium. The reflection layer 18 has a thickness, for example, in the range of 10 nm or more and 1000 nm or less.

The monolayer film layer 17 and the reflection layer 18 are formed by using a known thin film formation technique such as sputtering, vacuum deposition, or an atomic layer deposition method according to the material.

A method of transferring the color developing sheet 21 from the transfer sheet 20 to the adherend 31 is the same as the transfer method of the first embodiment. That is, the transfer sheet 20 is placed on the surface of the adherend 31 so that the adhesive layer 16 is in contact with the adherend 31, and the transfer sheet 20 is subjected to application of heat and pressure. Thus, the adhesive layer 16 is adhered to the surface of the adherend 31. Then, in the transfer sheet 20, the peelable substrate 12 is peeled off from the resin layer 13. In this manner, the color developing sheet 21 is transferred from the transfer sheet 20 to the adherend 31 to form a color developing article.

As shown in Fig. 10, in the color developing sheet 11 after being transferred to the adherend 31 (not shown), the surface of the resin layer 13 opposite to the surface having the uneven structure constitutes the outermost surface of the color developing sheet 21, and is exposed to the outside air. The adhesive layer 16 constitutes the outermost surface of the color developing sheet 21 on the side opposite to the above-described outermost surface of the color developing sheet 21 constituted by the resin layer 13, and the adhesive layer 16 is in contact with the adherend 31.

The color developing sheet 21 is observed from a side of the monolayer film layer 17 on which the resin layer 13 is located. When light is incident on the color developing sheet 21, light rays reflected at the front and rear surfaces of the monolayer film layer 17 interfere with each other and change the traveling direction due to the irregular uneven portion on the outermost surface of the monolayer film layer 17; thus, light in a specific wavelength range is emitted in a wide angular range.

### [Effects]

Effects of the second embodiment will be described. Also in the transfer sheet 20 of the second embodiment, the peelable substrate 12 and the resin layer 13 are configured to be peelable from each other, and during transfer of the color developing sheet 21, only the peelable substrate 12 is peeled off. Thus, in the color developing sheet 21, one of the uneven structures on the front and rear surfaces of the monolayer film layer 17 that is located closer to the resin layer 13, i.e., the uneven structure constituting the surface of the monolayer film layer 17 located closer to an observer, is covered with the resin layer 13. Furthermore, one of the uneven structures on the front and rear surfaces of the monolayer film layer 17 that is located closer to the adhesive layer 16, i.e., the uneven structure constituting the surface of the monolayer film layer 17 located farther from the observer, is covered with the reflection layer 18 and the adhesive layer 16. Accordingly, the uneven structures of the monolayer film layer 17 are protected. Thus, as compared with a configuration in which the uneven structures are exposed to the outside, deformation of the uneven structures of the monolayer film layer 17 having an optical function can be prevented.

The color developing sheet 21 does not have the peelable substrate 12 which is the substrate used during production of the transfer sheet. Thus, as in first embodiment, the color developing sheet 21 is increased in flexibility and reduced in thickness.

The transfer sheet 20 and the color developing sheet 21 include the monolayer film layer 17 composed of the monolayer thin film, as a layer that is laminated on the resin layer 13 and which exhibits structural colors. Thus, a smaller number of steps are required to produce the transfer sheet 20 and the color developing sheet 21 than for the configuration in which, as in the first embodiment, the transfer sheet 10 and the color developing sheet 11 include the multilayer film layer 14 composed of the plurality of thin films. This improves productivity of the transfer sheet 20 and the color developing sheet 21.

In the second embodiment, the monolayer film layer 17 is the thin film layer, and the reflection layer 18 is the low transmission layer. In addition to the effects (1) and (3) to (7) of the first embodiment, the second embodiment can achieve the following effects.
(8) The thin film layer is composed of a monolayer thin film. Thus, a smaller number of steps are required to produce the transfer sheet 20 and the color developing sheet 21 than in the case where the thin film layer is a multilayer film.
(9) The reflection layer 18 has a visible light transmittance of 30% or less. Furthermore, for light reflected at the interface between the monolayer film layer 17 and the reflection layer 18, the refractive index of the reflection layer 18 is higher than the refractive index of the monolayer film layer 17, and the extinction coefficient of the monolayer film layer 17 is 1 or less and the extinction coefficient of the reflection layer 18 is larger than 1. This configuration provides a higher reflectance at the interface between the monolayer film layer 17 and the reflection layer 18, and allows reflected light having a higher intensity to emerge from the thin film layer. Thus, the visibility of the color due to the reflected light is improved.
(10) The monolayer film layer 17 is a layer made of any material selected from an inorganic oxide, an inorganic nitride, and an inorganic oxynitride, and the reflection layer 18 is a metal layer. Furthermore, for light reflected at the interface between the monolayer film layer 17 and the reflection layer 18, the refractive index of the reflection layer 18 is higher than the refractive index of the monolayer film layer 17, and the extinction coefficient of the monolayer film layer 17 is 1 or less and the extinction coefficient of the reflection layer 18 is larger than 1. This configuration provides a higher reflectance at the interface between the monolayer film layer 17 and the reflection layer 18, and allows reflected light having a higher intensity to emerge from the thin film layer. Thus, the visibility of the color due to the reflected light is improved.

### [Modifications]

The above embodiments may be modified and implemented as follows. · In the first embodiment, when the absorption layer 15 is configured to have light absorption properties of not absorbing all light in the visible range but absorbing at least part of the light transmitted through the multilayer film layer 14, the absorption layer 15 achieves the effect of preventing reduction in the visibility of the color due to the reflected light, as compared with a configuration provided with no layer having such light absorption properties. For example, the absorption layer 15 may be a layer containing a pigment of a color corresponding to the wavelength range of light transmitted through the multilayer film layer 14. However, when the absorption layer 15 is a black layer containing a black pigment, the absorption layer 15 requires no color adjustment or the like according to the wavelength range of the transmitted light, and the absorption layer 15 absorbs light in a wide wavelength range; thus, reduction in the visibility of the color due to the reflected light can be easily and suitably prevented.

· In the second embodiment, the monolayer film layer 17 and the reflection layer 18 are required to be configured to have a high reflectance for light in at least part of the wavelength range of light reflected at the interface between the monolayer film layer 17 and the reflection layer 18. The configuration having a high reflectance for light in part of the wavelength range of the reflected light also achieves the effect of increasing the intensity of the reflected light, as compared with a configuration having a low reflectance for light in the entire wavelength range of the reflected light. Specifically, the monolayer film layer 17 and the reflection layer 18 are preferably configured such that for light in the at least part of the wavelength range, the refractive index n2 of the reflection layer 18 is higher than the refractive index n1 of the monolayer film layer 17, and the extinction coefficient k1 of the monolayer film layer 17 is 1 or less and the extinction coefficient k2 of the reflection layer 18 is larger than 1.

• In the above embodiments, during transfer of the color developing sheets 11 and 21, heat and pressure are applied to the transfer sheets 10 and 20. The method of transferring the color developing sheets 11 and 21 is not limited to such thermal transfer, and may be another transfer method such as hydraulic transfer. That is, the adhesive layer 16 may not necessarily have the property of exhibiting adhesiveness by being heated, and, for example, the adhesive layer 16 may be adhered to the adherend 31 by application of only pressure or by irradiation with ultraviolet light.

• The transfer sheet and the color developing sheet may include the multilayer film layer 14 as the thin film layer and include the reflection layer 18 as the low transmission layer. In other words, in the second embodiment, the thin film layer may be composed of a plurality of thin films.

• The transfer sheets 10 and 20 and the color developing sheets 11 and 21 may include, in addition to the layers described in the above embodiments, a layer for improving adhesion between the layers, a layer having an ultraviolet absorption function, or the like.

• In the resin layer 13, the figure that constitutes the pattern composed of the projection 13a in the first structure of the uneven structure, and the pattern composed of the first projection element 13Ea in the second structure of the uneven structure is not limited to a rectangle. The figure that constitutes these patterns may be an ellipse or the like. In short, the figure is a shape element having a shape in which the length in the second direction Dy is equal to or greater than the length in the first direction Dx. Furthermore, the length d1 in the first direction Dx and the length d2 in the second direction Dy of the shape element need to satisfy the various conditions described for the first structure.

• The projection that constitutes the uneven structure of the resin layer 13 may have a configuration in which the width in the first direction Dx gradually decreases from the base portion toward the top. This configuration facilitates formation of the multilayer film layer 14 or the monolayer film layer 17 on the projection. In this case, the length d1 and the length d3 in the first direction Dx are defined by a pattern composed of the bottom surface of the projection.

## Claims

1. A transfer sheet comprising:
a peelable substrate;
an uneven layer that is in contact with the peelable substrate so as to be peelable and has an uneven structure on a surface opposite to a surface in contact with the peelable substrate;
a thin film layer that is located on the uneven structure and has a surface shape following the uneven structure and from which reflected light enhanced by interference emerges;
a low transmission layer that is located on a side of the thin film layer opposite to the uneven layer and has a lower transmittance for light in a visible range than the thin film layer; and
an adhesive layer that is located on a side of the low transmission layer opposite to the thin film layer, wherein:
a projection included in the uneven structure has a shape having one or more steps from a plane in which a base portion of the projection is located;
when viewed in a direction perpendicular to the surface of the uneven layer, a pattern composed of the projection includes a pattern composed of a group of a plurality of shape elements in each of which a length in a first direction is equal to or less than a subwavelength and a length in a second direction orthogonal to the first direction is equal to or greater than the length in the first direction; and
in the plurality of shape elements, a standard deviation of the length in the second direction is larger than a standard deviation of the length in the first direction.

2. The transfer sheet according to claim 1, wherein:
the thin film layer is a laminate of a plurality of thin films, and in the thin film layer, adjacent ones of the thin films have different refractive indices from each other; and
the low transmission layer has light absorption properties of absorbing at least part of light transmitted through the thin film layer.

3. The transfer sheet according to claim 1, wherein:
the thin film layer is composed of a monolayer thin film;
the low transmission layer has a visible light transmittance of 30% or less; and
for light in at least part of a wavelength range of light reflected at an interface between the thin film layer and the low transmission layer, a refractive index of the low transmission layer is higher than a refractive index of the thin film layer, and an extinction coefficient of the thin film layer is 1 or less and an extinction coefficient of the low transmission layer is larger than 1.

4. The transfer sheet according to claim 1, wherein:
the thin film layer is composed of a monolayer thin film made of any material selected from an inorganic oxide, an inorganic nitride, and an inorganic oxynitride;
the low transmission layer is a metal layer; and
for light in at least part of a wavelength range of light reflected at an interface between the thin film layer and the low transmission layer, a refractive index of the low transmission layer is higher than a refractive index of the thin film layer, and an extinction coefficient of the thin film layer is 1 or less and an extinction coefficient of the low transmission layer is larger than 1.

5. The transfer sheet according to any one of claims 1 to 4, wherein the adhesive layer exhibits adhesiveness by being heated.

6. The transfer sheet according to any one of claims 1 to 5, wherein the uneven layer is made of a thermoplastic resin.

7. The transfer sheet according to any one of claims 1 to 6, wherein:
the pattern composed of the projection includes only the pattern composed of a group of the plurality of shape elements; and
the projection has a constant height.

8. The transfer sheet according to any one of claims 1 to 6, wherein:
when the uneven structure is viewed in the direction perpendicular to the surface of the uneven layer, the pattern composed of the projection is a pattern in which a first pattern composed of the group of shape elements and a second pattern composed of a plurality of strip-shaped regions are superimposed, and the plurality of strip-shaped regions extend in the second direction and are arranged in the first direction;
in the second pattern, an arrangement interval of the strip-shaped regions in the first direction is not constant in the plurality of strip-shaped regions, and an average value of the arrangement intervals in the plurality of strip-shaped regions is 1/2 or more of a minimum wavelength in a wavelength range of light incident on the thin film layer; and
the projection has a multi-stage shape in which a first projection element and a second projection element are superimposed in a height direction, the first projection element has a predetermined height and is an element whose projected image in a lamination direction of the uneven layer and the thin film layer constitutes the first pattern, and the second projection element has a predetermined height and is an element whose projected image in the lamination direction constitutes the second pattern.

9. A color developing sheet comprising:
an uneven layer having a surface having an uneven structure;
a thin film layer that is located on the uneven structure and has a surface shape following the uneven structure and from which reflected light enhanced by interference emerges;
a low transmission layer that is located on a side of the thin film layer opposite to the uneven layer and has a lower transmittance for light in a visible range than the thin film layer; and
an adhesive layer that is located on a side of the low transmission layer opposite to the thin film layer, wherein:
a projection included in the uneven structure has a shape having one or more steps from a plane in which a base portion of the projection is located;
when viewed in a direction perpendicular to the surface of the uneven layer, a pattern composed of the projection includes a pattern composed of a group of a plurality of shape elements in each of which a length in a first direction is equal to or less than a subwavelength and a length in a second direction orthogonal to the first direction is equal to or greater than the length in the first direction; and
in the plurality of shape elements, a standard deviation of the length in the second direction is larger than a standard deviation of the length in the first direction.

10. A color developing article comprising:
the color developing sheet according to claim 9; and
an adherend to which the color developing sheet is bonded and that is in contact with the adhesive layer.

11. A transfer method comprising:
placing the transfer sheet according to any one of claims 1 to 8 on a surface of an adherend and adhering the adhesive layer to the adherend; and
peeling off the peelable substrate from the uneven layer.

12. The transfer method according to claim 11, wherein adhering the adhesive layer to the adherend includes adhering the adhesive layer to the adherend by heating.
